# EUROPEAN PATENT APPLICATION

(11) **EP 4 400 987 A1**
(43) Date of publication of application: **17.07.2024**
(21) Application number: 23186615.3
(22) Date of filing: 20.07.2023
(51) Int. Cl.: G06F 16/955

(54) **INFORMATION PROCESSING SYSTEM, PROGRAM, AND INFORMATION PROCESSING METHOD**

(30) Priority: 16.01.2023 JP 2023004354
(71) Applicant: FUJIFILM Business Innovation Corp., Minato-ku Tokyo (JP)
(72) Inventor: SAKATA, Yui, Yokohama-shi, Kanagawa (JP)
(74) Representative: Kurig, Thomas

(57) **Abstract**

An information processing system includes one or plural processors configured to, in a case where an operation of designating a first link object is performed, perform a control of displaying annotation information of a first web page associated with the first link object in a superimposed manner on the first web page, and in a case where an operation of designating a second link object is performed, perform a control of displaying annotation information of a second web page associated with the second link object in a superimposed manner on the second web page, in which information for accessing the first web page is identical to information for accessing the second web page.

## Description

### BACKGROUND OF THE INVENTION

### (i) Field of the Invention

The present invention relates to an information processing system, a program, and an information processing method.

### (ii) Description of Related Art

A technology for displaying an electronic tag on a web page has been known as a technology for assisting a user who has accessed a web page (for example, JP2012-203831A). In this technology, the electronic tag that is associated in advance with each web page is displayed. Thus, the same electronic tag is displayed regardless of a method of accessing the web page.

### SUMMARY OF THE INVENTION

However, one web page may have a plurality of uses instead of a uniform use. Thus, the displayed electronic tag may not be useful depending on the use.

An object of the present invention is to provide annotation information such as a note, a guide, or a tag of a web page that is displayed together with the web page and that corresponds to a use of the web page.

According to a first aspect of the present disclosure, there is provided an information processing system including one or a plurality of processors configured to, in a case where an operation of designating a first link object is performed, perform a control of displaying annotation information of a first web page associated with the first link object in a superimposed manner on the first web page, and in a case where an operation of designating a second link object is performed, perform a control of displaying annotation information of a second web page associated with the second link object in a superimposed manner on the second web page, in which information for accessing the first web page is identical to information for accessing the second web page.

According to a second aspect of the present disclosure, there is provided the information processing system according to the first aspect, in which the one or the plurality of processors may be configured to manage the information for accessing the first web page and the annotation information of the first web page in association with the first link object, and manage the information for accessing the second web page and the annotation information of the second web page in association with the second link object.

According to a third aspect of the present disclosure, there is provided the information processing system according to the second aspect, in which the one or the plurality of processors may be configured to, in a case where an operation of editing the annotation information of each of the first web page and the second web page is performed, update the annotation information to content after the editing and manage versions before and after the update.

According to a fourth aspect of the present disclosure, there is provided the information processing system according to the third aspect, in which the one or the plurality of processors may be configured to manage a captured image of each of the first web page and the second web page on which the annotation information is displayed in a superimposed manner, for each of the versions.

According to a fifth aspect of the present disclosure, there is provided the information processing system according to the second aspect, in which the one or the plurality of processors may be configured to, in a case where an operation of duplicating each of the first link object and the second link object is performed, duplicate each of the first link object and the second link object, and manage the information, which is managed in association with each of the first link object and the second link object, in association with each of the first link object and the second link object after the duplication.

According to a sixth aspect of the present disclosure, there is provided the information processing system according to the first aspect, in which the one or the plurality of processors may be configured to, in a case where an operation of inputting the information for accessing each of the first web page and the second web page is performed instead of the operation of designating the first link object or the second link object, perform a control of not displaying the annotation information of each of the first web page and the second web page.

According to a seventh aspect of the present disclosure, there is provided the information processing system according to the sixth aspect, in which the operation of inputting the information for accessing each of the first web page and the second web page may be an operation of inputting a uniform resource locator of each of the first web page and the second web page into an address bar of a browser.

According to an eighth aspect of the present disclosure, there is provided a program causing a computer to implement a function of, in a case where an operation of designating a first link object is performed, displaying annotation information of a first web page associated with the first link object in a superimposed manner on the first web page, and a function of, in a case where an operation of designating a second link object is performed, displaying annotation information of a second web page associated with the second link object in a superimposed manner on the second web page, in which information for accessing the first web page is identical to information for accessing the second web page.

According to a ninth aspect of the present disclosure, there is provided an information processing method including displaying, in a case where an operation of designating a first link object is performed, annotation information of a first web page associated with the first link object in a superimposed manner on the first web page, and displaying, in a case where an operation of designating a second link object is performed, annotation information of a second web page associated with the second link object in a superimposed manner on the second web page, in which information for accessing the first web page is identical to information for accessing the second web page.

According to the first aspect of the present disclosure, even in a case where the information for accessing the web page of the link destination of each of different link objects is identical, different annotation information can be displayed in a superimposed manner on the web page. Consequently, the annotation information corresponding to a use of the web page can be displayed.

According to the second aspect of the present disclosure, since each link object is managed in association with the information for accessing the web page and with the annotation information, the use of the web page can be determined for each link object. Consequently, even identical web pages can display different annotation information for each link object.

According to the third aspect of the present disclosure, in a case where the annotation information is edited, the versions before and after the editing are managed. Thus, a user easily checks each version.

According to the fourth aspect of the present disclosure, since the captured image of the web page on which the annotation information is displayed in a superimposed manner is managed for each of the versions, the user easily checks display content and a display position of the annotation information for each version.

According to the fifth aspect of the present disclosure, in a case where the operation of duplicating an existing link object is performed, the information associated with the link object is also duplicated. Thus, an effort of creating the link object from scratch can be eliminated for the user.

According to the sixth aspect of the present disclosure, operation of the user who does not want to refer to the annotation information can be assisted.

According to the seventh aspect of the present disclosure, operation of the user who does not want to refer to the annotation information can be assisted.

According to the eighth aspect of the present disclosure, even in a case where the information for accessing the web page of the link destination of each of different link objects is identical, different annotation information can be displayed in a superimposed manner on the web page. Consequently, the annotation information corresponding to the use of the web page can be displayed.

According to the ninth aspect of the present disclosure, even in a case where the information for accessing the web page of the link destination of each of different link objects is identical, different annotation information can be displayed in a superimposed manner on the web page. Consequently, the annotation information corresponding to the use of the web page can be displayed.

### BRIEF DESCRIPTION OF THE DRAWINGS

Exemplary embodiment(s) of the present invention will be described in detail based on the following figures, wherein:
Fig. 1 is a diagram illustrating an example of an overall configuration of an information processing system to which the present exemplary embodiment is applied;
Fig. 2 is a diagram illustrating an example of a hardware configuration of a management server;
Fig. 3 is a diagram illustrating an example of a functional configuration of a control unit of the management server;
Fig. 4 is a diagram illustrating an example of a functional configuration of a control unit of a user terminal;
Fig. 5 is a flowchart illustrating an example of a flow of processing of the management server;
Fig. 6 is a flowchart illustrating an example of the flow of processing of the management server;
Fig. 7 is a diagram illustrating a specific example of a dedicated UI displayed on a display unit of the user terminal;
Fig. 8 is a diagram illustrating a specific example of the dedicated UI displayed on the display unit of the user terminal;
Fig. 9 is a diagram illustrating a specific example of information stored in a database stored in a storage unit of the management server;
Figs. 10A and 10B are diagrams illustrating a specific example of an operation of creating link objects that have the same information for accessing a web page of a link destination and that have different annotation information;
Fig. 11 is a diagram illustrating a specific example of an operation of creating link objects that have the same information for accessing a web page of a link destination and that have different annotation information;
Fig. 12A is a diagram illustrating a specific example of an operation of not displaying the annotation information, Figs. 12B and 12C are diagrams illustrating a specific example of a method of notifying a user of presence of non-displayable annotation information, and Fig. 12D is a diagram illustrating a specific example of a capture image of the web page of the link destination displayed in a case where a link button of a banner in the example in Fig. 12C is pressed; and
Fig. 13 is a diagram illustrating a specific example of other information associated with a link object in an object DB.

### DETAILED DESCRIPTION OF THE INVENTION

Hereinafter, an exemplary embodiment of the present invention will be described in detail with reference to the accompanying drawings.

### <Overall Configuration of Information Processing System>

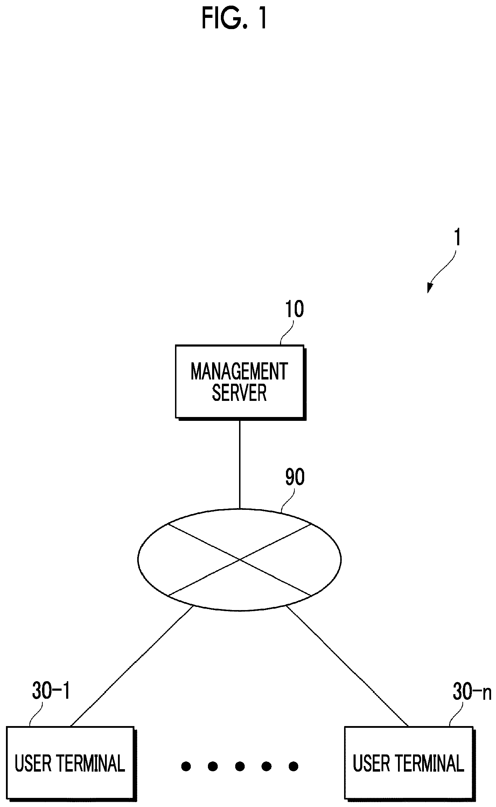

Fig. 1 is a diagram illustrating an example of an overall configuration of an information processing system 1 to which the present exemplary embodiment is applied.

The information processing system 1 is configured by connecting a management server 10 to user terminals 30-1 to 30-n (n is an integer value greater than or equal to 1) via a network 90. The network 90 is, for example, a local area network (LAN) or the Internet.

### (Management Server)

The management server 10 constituting the information processing system 1 is an information processing apparatus as a server that manages the entire information processing system 1. The management server 10 acquires various types of information transmitted from each of the user terminals 30-1 to 30-n and performs various types of processing. In addition, the management server 10 transmits various types of information toward each of the user terminals 30-1 to 30-n.

For example, the management server 10 manages an object (hereinafter, referred to as a "link object") that is a shortcut icon for displaying a web page of a link destination (hereinafter, simply referred to as the "link destination"), in association with various types of information. Specifically, the management server 10 manages identification information (for example, an ID) with which the link object can be uniquely specified, in association with various types of information.

Examples of the information associated with the link object include information for accessing the link destination and information (hereinafter, referred to as "annotation information") related to an annotation such as a note, a guide, or a tag of the link destination. Examples of the information for accessing the link destination in the information associated with the link object include a uniform resource locator (URL). Hereinafter, the information for accessing the link destination will be described as a URL in the present exemplary embodiment.

The management server 10 can store and manage a plurality of link objects having the identical URL of the link destination in a database. Here, in a case where the link objects are associated with the annotation information, each of the plurality of link objects having the identical URL of the link destination is managed in association with different annotation information.

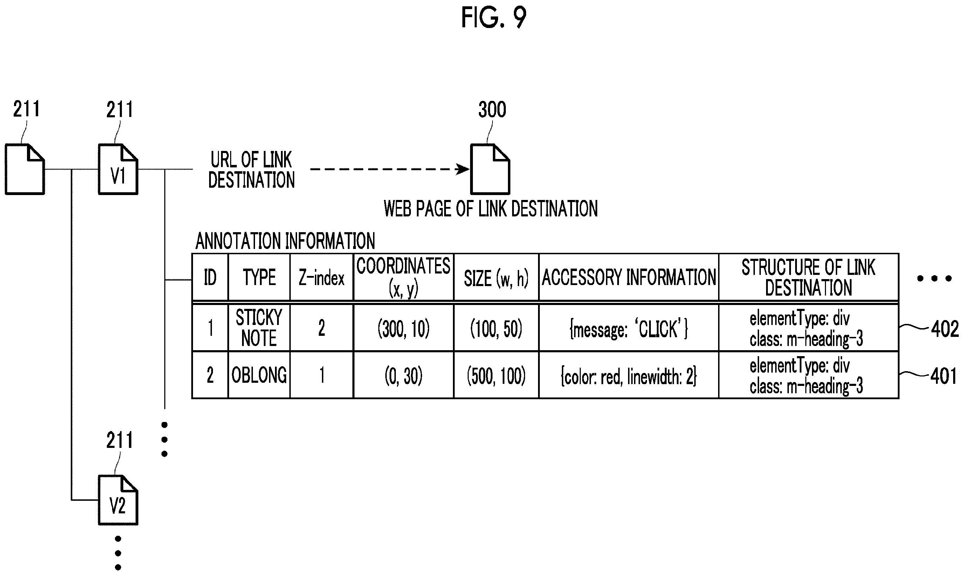

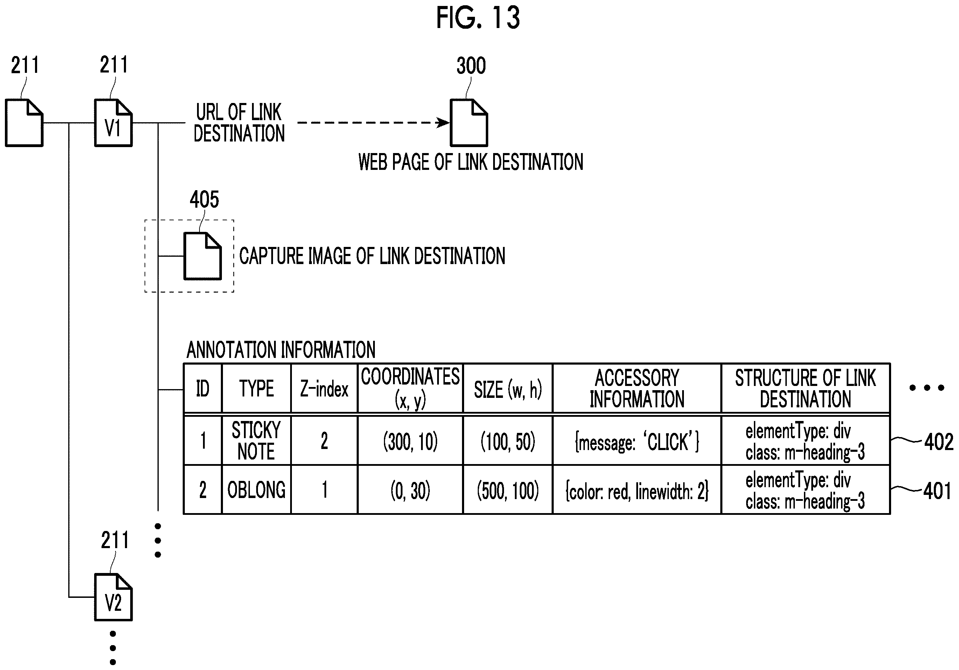

For example, an assumption that two link objects having the identical URL of the link destination are stored in the database is made. In this case, the annotation information associated with the first link object may be different from the annotation information associated with the second link object. Specific examples of the link object stored in the database and of various types of information associated with the link object will be described later with reference to Fig. 9 and Fig. 13.

The management server 10 performs a control for displaying one or more link objects stored in the database on a user terminal 30. Specifically, the management server 10 performs a control for displaying, on the user terminal 30, a user interface (hereinafter, referred to as a "dedicated UI") of dedicated application software with which the link object can be created and displayed. In addition, the management server 10 performs a control of displaying one or more link objects in the form of being individually designatable by an input operation of a user on the dedicated UI displayed on the user terminal 30.

In a case where an input operation for designating one link object among one or more link objects displayed on the dedicated UI is performed, the management server 10 accesses the URL of the link destination associated with the designated link object. The management server 10 performs a control for displaying the web page of the link destination on the dedicated UI and a control for displaying the annotation information in a superimposed manner on the web page. The "input operation for designating one link object" refers to, for example, a double-click operation or a mouse-over operation with respect to one link object.

Here, for example, an assumption that a plurality of link objects are displayed on the dedicated UI and that each link object is associated with the identical URL of the link destination and with different annotation information is made. In this case, the displayed web page is the same for any link object designated among the plurality of link objects. However, different annotation information is displayed because the annotation information displayed in a superimposed manner on the web page is the annotation information associated with each link object.

In addition, the management server 10 generates the link object based on input information. Specifically, the management server 10 generates the link object based on input information input by the user for creating the link object and stores and manages the link object in the database in association with various types of information. The input information for creating the link object is information transmitted from the user terminal 30. Details of the configuration and processing of the management server 10 will be described in detail later.

### (User Terminal)

Each of the user terminals 30-1 to 30-n is an information processing apparatus such as a personal computer, a tablet terminal, or a smartphone operated by the user who uses the information processing system 1. Each of 30-1 to 30-n acquires various types of information transmitted from the management server 10 and performs various types of processing. In addition, each of 30-1 to 30-n transmits various types of information toward the management server 10. Hereinafter, the user terminals 30-1 to 30-n will be collectively referred to as the "user terminal 30" unless necessary to be individually described.

For example, the user terminal 30 receives the information input by the user for creating the link object and transmits the input information toward the management server 10. Examples of the input information transmitted toward the management server 10 include information input for associating the link object with the URL of the link destination and information input for associating the link object with the annotation information of the URL of the link destination.

The above configuration of the information processing system 1 is merely an example, and the information processing system 1 as a whole may have functions that implement the above processing. Thus, all or a part of the functions implementing the above processing may be shared or used in cooperation with each other in the information processing system 1. That is, all or a part of the functions of the management server 10 may be provided as functions of the user terminal 30, or all or a part of the functions of the user terminal 30 may be provided as functions of the management server 10. In addition, all or a part of the functions of each of the management server 10 and the user terminal 30 constituting the information processing system 1 may be handed over to another server or the like, not illustrated, to perform all or a part of the above processing. Accordingly, the processing of the information processing system 1 as a whole can be accelerated, and the processing may also be complemented.

### <Hardware Configuration of Management Server>

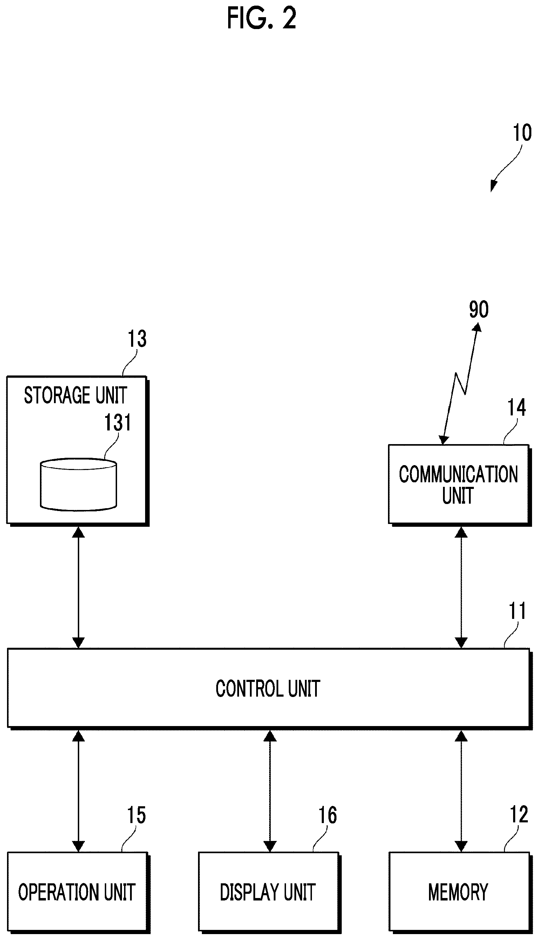

Fig. 2 is a diagram illustrating an example of a hardware configuration of the management server 10.

The management server 10 includes a control unit 11, a memory 12, a storage unit 13, a communication unit 14, an operation unit 15, and a display unit 16. Each of these units is connected via a data bus, an address bus, a peripheral component interconnect (PCI) bus, or the like.

The control unit 11 is a processor that controls the functions of the management server 10 by executing various types of software such as an OS (basic software) and application software (software applications). The control unit 11 is configured with, for example, a central processing unit (CPU). The memory 12 is a storage region in which various types of software and data and the like used for executing the software are stored, and is used as a work area in operations. The memory 12 is configured with, for example, a random access memory (RAM).

The storage unit 13 is a storage region in which input data for various types of software, output data from various types of software, and the like are stored. The storage unit 13 is configured with, for example, a hard disk drive (HDD), a solid state drive (SSD), or a semiconductor memory used for storing programs, various types of setting data, and the like. A database that stores various types of information is stored in the storage unit 13. For example, an object DB 131 in which various types of information associated with the link object are stored is stored as the database stored in the storage unit 13.

The communication unit 14 transmits and receives data to and from the user terminal 30 and the outside via the network 90. The operation unit 15 is configured with, for example, a keyboard, a mouse, a mechanical button, or a switch and receives an input operation. The operation unit 15 may include a touch sensor that is integrated with the display unit 16 to constitute a touch panel. The display unit 16 is configured with, for example, a liquid crystal display or an organic electro luminescence (EL) display used for displaying information and displays image (video and still image) data, text data, and the like.

### <User Terminal and Hardware Configuration of User Terminal>

A hardware configuration of the user terminal 30 has the same configuration as the hardware configuration of the management server 10 illustrated in Fig. 2. That is, the user terminal 30 includes each of a control unit, a memory, a storage unit, a communication unit, an operation unit, and a display unit having the same functions as each of the control unit 11, the memory 12, the storage unit 13, the communication unit 14, the operation unit 15, and the display unit 16 in Fig. 2 and will not be illustrated or described.

### <Functional Configuration of Control Unit of Management Server>

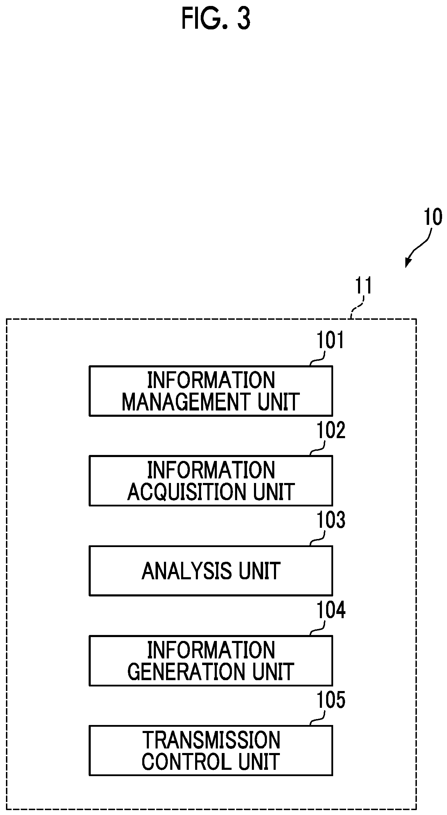

Fig. 3 is a diagram illustrating an example of a functional configuration of the control unit 11 of the management server 10.

An information management unit 101, an information acquisition unit 102, an analysis unit 103, an information generation unit 104, and a transmission control unit 105 function in the control unit 11 of the management server 10.

The information management unit 101 stores and manages various types of information in the database of the storage unit 13 (refer to Fig. 2). For example, the information management unit 101 stores and manages the link object generated by the information generation unit 104, described later, in the object DB 131. The link object stored in the object DB 131 is associated with various types of information such as the URL of the link destination and the annotation information.

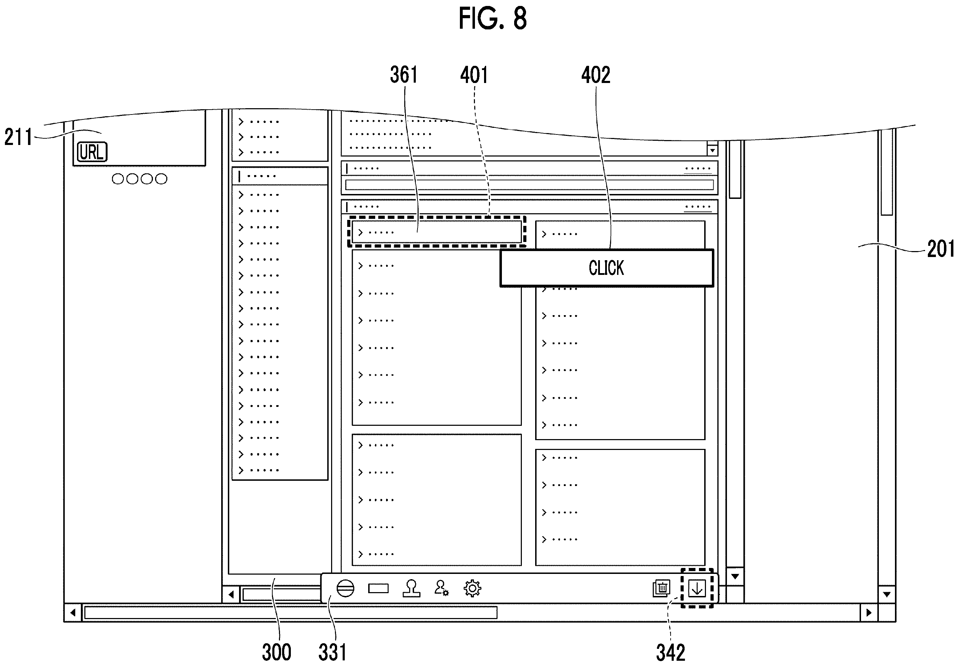

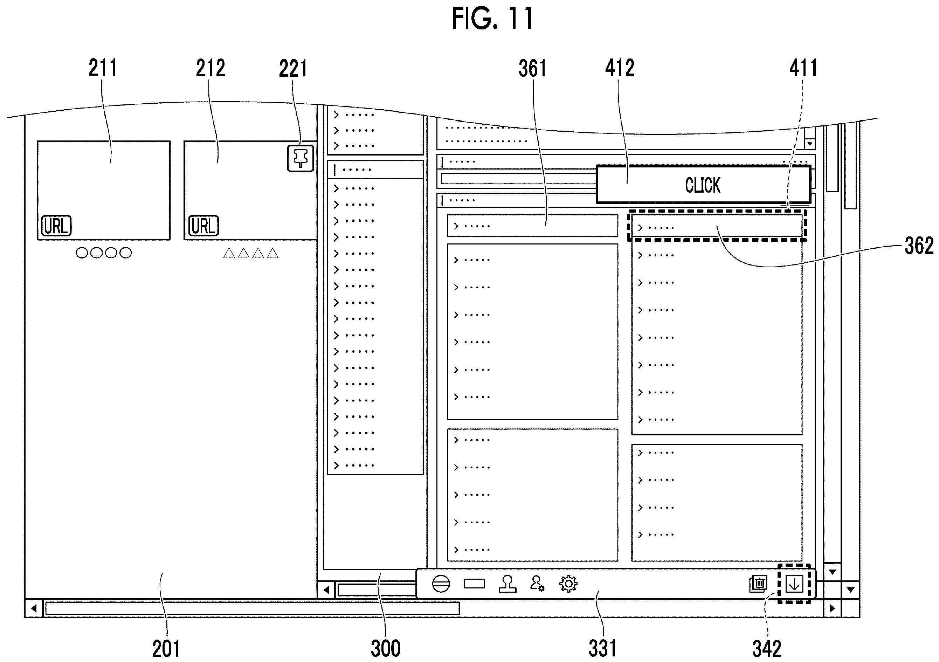

In a case where various types of information associated with the link object in the object DB 131 are changed, the information management unit 101 updates the information stored in the object DB 131 based on content after the change. For example, in a case where the annotation information of the link destination associated with the link object in the object DB 131 is changed, the information management unit 101 updates the annotation information of the link destination stored in the object DB 131. In this case, the information management unit 101 updates a version of the link object in accordance with the update of the annotation information of the link destination. Specific examples of the link object stored in the object DB 131 will be described later with reference to Fig. 8 and Fig. 11.

The information acquisition unit 102 acquires various types of information. For example, the information acquisition unit 102 acquires information transmitted from each of the user terminal 30 and the outside. Examples of the information transmitted from the user terminal 30 in the information acquired by the information acquisition unit 102 include the input information input for creating the link object, input information input for designating the link object, and input information input for creating the annotation information. In addition, examples of the information transmitted from the outside in the information acquired by the information acquisition unit 102 include HTML information of the web page of the link destination transmitted from an external server or the like of an access destination in a case where the URL of the web page of the link destination is accessed.

The analysis unit 103 analyzes various types of information. For example, the analysis unit 103 analyzes a structure of the web page of the link destination. Methods used for analyzing the web page of the link destination via the analysis unit 103 are not particularly limited. For example, a method of analyzing the HTML information of the web page or a method of analyzing the structure of the web page may be used. In a case of using the method of analyzing the HTML information of the web page, for example, a method of analyzing the Document Object Model (DOM) that is an application programming interface (API) defining elements and the like constituting an HTML document may be used.

The information generation unit 104 generates various types of information. For example, the information generation unit 104 generates the link object based on the input information that is input for creating the link object and that is acquired by the information acquisition unit 102, and on a result of analyzing the web page of the link destination via the analysis unit 103. The link object generated by the information generation unit 104 is stored in the object DB 131 of the storage unit 13 to be managed. In addition, the information generation unit 104 generates the annotation information based on the input information that is input for creating the annotation information and that is acquired by the information acquisition unit 102, and on the result of analyzing the web page of the link destination via the analysis unit 103.

The transmission control unit 105 performs a control of transmitting various types of information. Specifically, the transmission control unit 105 performs a control of transmitting various types of information toward each of the user terminal 30 and the outside. Examples of the information transmitted toward the user terminal 30 in the information transmitted by the control of the transmission control unit 105 include the link object and the annotation information generated by the information generation unit 104.

### <Functional Configuration of Control Unit of User Terminal>

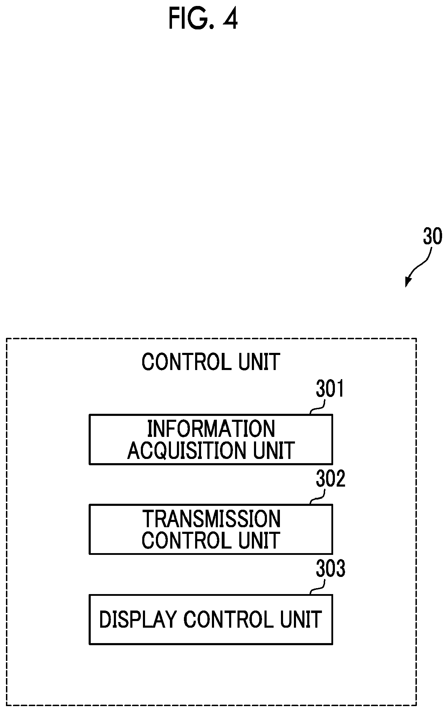

Fig. 4 is a diagram illustrating an example of a functional configuration of the control unit of the user terminal 30.

An information acquisition unit 301, a transmission control unit 302, and a display control unit 303 function in the control unit of the user terminal 30.

The information acquisition unit 301 acquires various types of information. Specifically, the information acquisition unit 301 acquires information transmitted from the management server 10 and from the outside. Examples of the information transmitted from the management server 10 in the information acquired by the information acquisition unit 301 include the generated link object and the generated annotation information.

In addition, the information acquisition unit 301 acquires information input via the operation unit. Examples of the information input via the operation unit include the input information input for creating the link object, the input information input for designating the link object, and input information input for accessing the web page without designating the link object.

The transmission control unit 302 performs a control of transmitting various types of information. Specifically, the transmission control unit 302 performs a control of transmitting various types of information toward the management server 10 and toward the outside. Examples of the information transmitted toward the management server 10 in the information transmitted by the control of the transmission control unit 302 include the input information input for creating the link object, the input information input for designating the link object, and the input information input for accessing the web page without designating the link object.

The display control unit 303 performs a control of displaying various types of information on the display unit. Specifically, the display control unit 303 performs a control of displaying the dedicated UI on the display unit. In addition, the display control unit 303 performs a control of displaying various types of information on the dedicated UI. Examples of the information displayed on the dedicated UI by the control of the display control unit 303 include the link object, the web page of the link destination associated with the link object, and the annotation information displayed in a superimposed manner on the web page of the link destination.

### <Flow of Processing of Management Server>

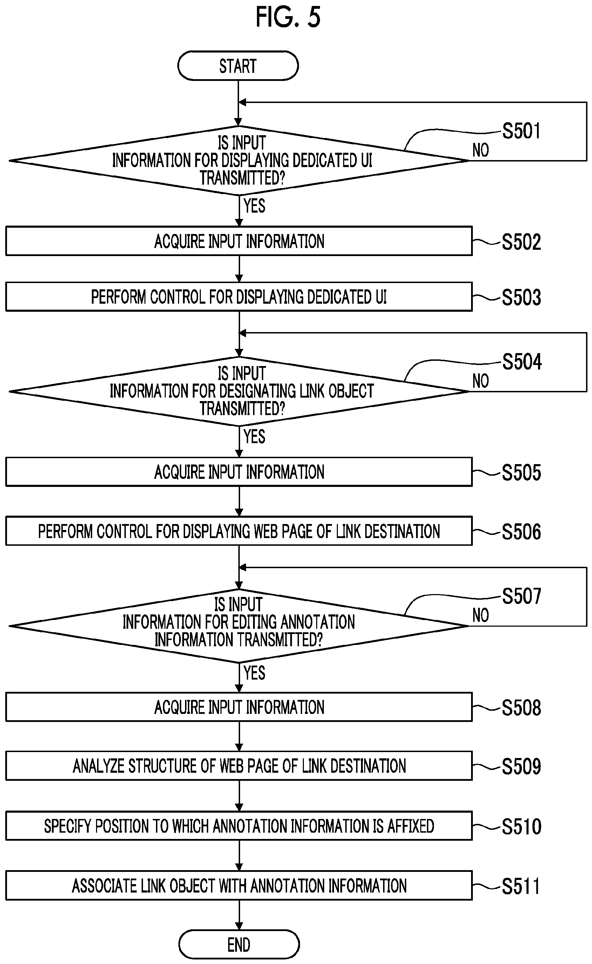

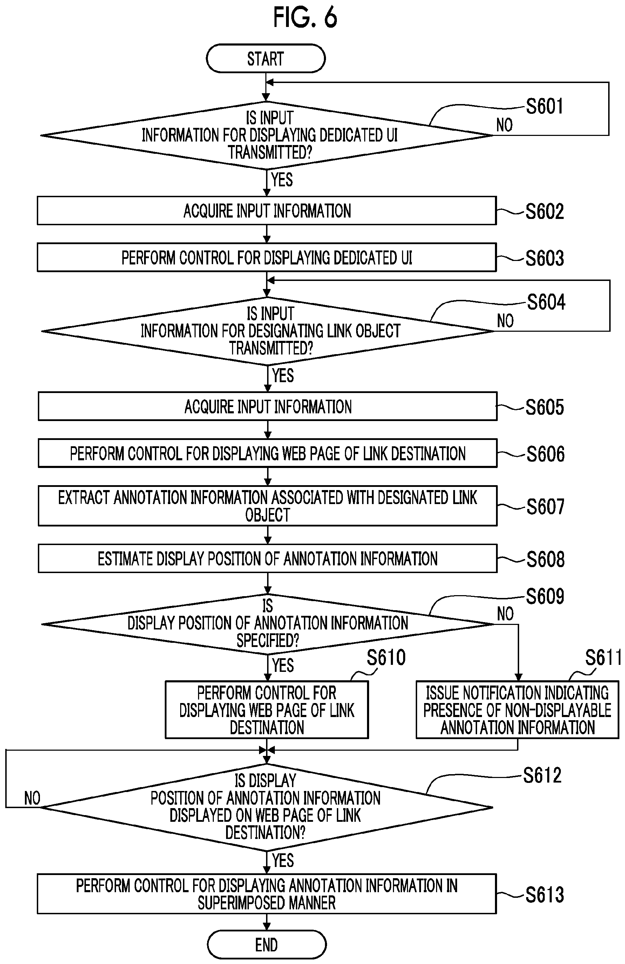

Fig. 5 and Fig. 6 are flowcharts illustrating an example of a flow of processing of the management server 10.

Fig. 5 illustrates a flow of processing of associating the link object with the annotation information in the processing of the management server 10.

In a case where input information for displaying the dedicated UI on the display unit is transmitted from the user terminal 30 (YES in step S501), the management server 10 acquires the transmitted input information (step S502). The management server 10 performs a control for displaying the dedicated UI on the user terminal 30 (step S503). On the other hand, in a case where the information input for displaying the dedicated UI is not transmitted (NO in step S501), the management server 10 repeats step S501 until the input information for displaying the dedicated UI is transmitted. One or more link objects that have already been created are displayed on the dedicated UI displayed on the display unit of the user terminal 30.

Next, in a case where the input information for designating the link object is transmitted from the user terminal 30 (YES in step S504), the management server 10 acquires the transmitted input information (step S505). The management server 10 performs a control for displaying the web page of the link destination specified from the input information on the user terminal 30 (step S506). On the other hand, in a case where the input information for designating the link object is not transmitted (NO in step S504), the management server 10 repeats step S504 until the input information for designating the link object is transmitted.

Next, in a case where input information for editing the annotation information is transmitted from the user terminal 30 (YES in step S507), the management server 10 acquires the transmitted input information (step S508). The management server 10 analyzes the structure of the web page of the link destination specified from the input information (step S509). On the other hand, in a case where the input information for editing the annotation information is not transmitted (NO in step S507), the management server 10 repeats step S507 until the input information for editing the annotation information is transmitted.

Next, the management server 10 specifies a position to which the annotation information is affixed on the web page of the link destination based on the result of the analysis in step S509 (step S510). The management server 10 associates the link object with the annotation information (step S511). Specifically, the management server 10 stores and manages the link object in the object DB 131 of the storage unit 13 in association with the annotation information.

Fig. 6 illustrates a flow of processing in a case where the input operation for designating the link object associated with the annotation information is performed in the processing of the management server 10. Among the steps of the processing illustrated in Fig. 6, the flow of processing of steps S601 to S606 is the same as the flow of processing of steps S501 to S506 in Fig. 5 and thus will not be described.

The management server 10 extracts the annotation information associated with the link object designated by the user among one or more link objects displayed on the dedicated UI (step S607). The management server 10 estimates a display position of the extracted annotation information (step S608). Specifically, the management server 10 estimates the display position of the annotation information based on the result of analyzing the structure of the web page of the link destination associated with the designated link object.

In a case where the display position of the annotation information is specified based on a result estimated in step S608 (YES in step S609), the management server 10 performs a control for displaying the web page of the link destination on the dedicated UI (step S610), and a transition is made to step S612. On the other hand, in a case where the display position of the annotation information cannot be specified (NO in step S609), a notification indicating presence of non-displayable annotation information is issued (step S611), and a transition is made to step S612. The processing of step S609 is performed the number of times corresponding to the number of pieces of the annotation information associated with the link object.

Examples of a reason that the display position of the annotation information cannot be specified include a reason such that in a case of estimating the position of the annotation information based on XML Path Language (Xpath) during, for example, the analysis of the DOM, corresponding Xpath is not found because of the update of the web page of the link destination. Here, "Xpath" refers to a language for designating a specific element in an HTML/XML document.

In a case where the display position of the annotation information is displayed on the web page of the link destination (YES in step S612), the management server 10 performs a control for displaying the annotation information in a superimposed manner on the web page of the link destination (step S613). On the other hand, in a case where the display position of the annotation information is not displayed on the web page of the link destination (NO in step S612), the processing of step S612 is repeated until the display position of the annotation information is displayed on the web page of the link destination. The processing of step S612 is performed each time the display of the display is changed by, for example, an operation of scrolling the web page of the link destination.

### <Specific Example>

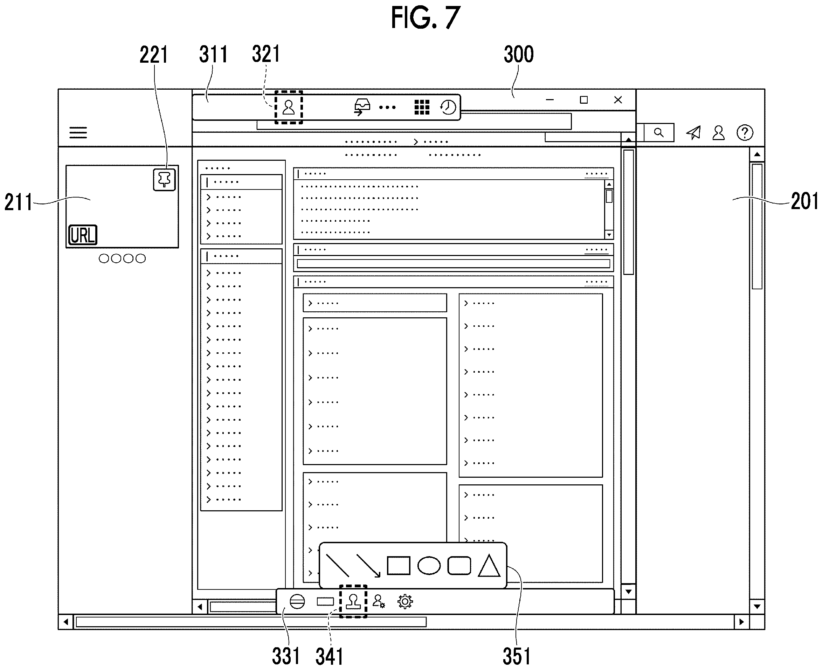

Fig. 7 and Fig. 8 are diagrams illustrating a specific example of a dedicated UI 201 displayed on the display unit of the user terminal 30.

As illustrated in Fig. 7, a link object 211 and a web page 300 of a link destination associated with the link object 211 are displayed on the dedicated UI 201. The web page 300 of the link destination is displayed by an operation (for example, a mouse-over or click operation) of designating the link object 211. At this point, the link object 211 is not associated with the annotation information.

In a case where a pin button 221 attached to the link object 211 is pressed in a state where the web page 300 of the link destination is displayed, the state where the web page 300 of the link destination is displayed is maintained. An operation bar 311 is displayed in a superimposed manner on the displayed web page 300 of the link destination. An operation button 321 for starting an operation of affixing the annotation information is provided on the operation bar 311.

In a case where the operation button 321 provided on the operation bar 311 is pressed, an operation bar 331 with which the operation of affixing the annotation information can be performed is displayed. An operation button 341 for creating the annotation information is provided on the operation bar 331. In a case where the operation button 341 is pressed, a figure editing bar 351 with which a figure as the annotation information can be edited is displayed.

In a case where one figure is selected from the figure editing bar 351 and is subjected to various types of editing (figure editing, text editing, and the like), the figure after the editing is displayed as the annotation information in a state where the figure can be subjected to a movement operation and to an affixing operation. For example, Fig. 8 illustrates an example in which each of annotation information 401 designated with "quadrangular", "broken line frame", and "not filled" by figure editing and annotation information 402 that is designated with "quadrangular", "thick frame", and "filled with white" by figure editing and that is marked with a text "click" by text editing is affixed.

The annotation information 401 illustrated in Fig. 8 is the annotation information that is affixed to highlight an element 361 among a plurality of elements displayed on the web page 300 of the link destination. In addition, the annotation information 402 is the annotation information that is affixed to guide the user who is a viewer to click the element 361. In a case where an operation of editing the annotation information is completed and where an operation button 342 is pressed, the edited annotation information is stored. Specifically, the edited annotation information 401 and 402 are managed in the object DB 131 of the storage unit 13 in association with the link object 211.

Fig. 9 is a diagram illustrating a specific example of information stored in the database stored in the storage unit 13 of the management server 10.

In the database stored in the storage unit 13 of the management server 10, the object DB 131 stores the link object 211 in association with a URL of the web page 300 of the link destination and with the annotation information. The URL of the web page 300 of the link destination and the annotation information are managed for each version. Both of "V1" and "V2" illustrated in Fig. 9 indicate individual versions.

The annotation information includes identification information (ID) with which the annotation information can be uniquely specified, a type of the annotation information, information (Z-index) indicating an order of affixing the annotation information, and coordinates indicating the display position of the annotation information displayed in a superimposed manner on the web page 300 of the link destination. In addition, the annotation information includes a size of the annotation information displayed in a superimposed manner on the web page 300 of the link destination, information (accessory information) indicating a character string and a figure as the annotation information, information indicating a structure of the web page 300 of the link destination, and the like.

Fig. 9 illustrates the annotation information of which the ID as the identification information with which the annotation information can be uniquely specified is "1", and the annotation information of which the "ID" is "2". The annotation information of which the "ID" is "1" shows that the type is "tag", the information (Z-index) indicating the affixing order is "2", and coordinates (x, y) indicating the display position of the annotation information displayed in a superimposed manner on the web page 300 of the link destination are "(300, 10)". In addition, the annotation information shows that a size "width (w), height (h)" in a case where the annotation information is displayed in a superimposed manner on the web page 300 of the link destination is "(100, 50)" and that a character string "click" is included.

In addition, the annotation information of which the "ID" is "2" shows that the type is "oblong", the information (Z-index) indicating the affixing order is "1", and the coordinates (x, y) indicating the display position of the annotation information displayed in a superimposed manner on the web page 300 of the link destination are "(0, 30)". In addition, the annotation information shows that the size "width (w), height (h)" in a case where the annotation information is displayed in a superimposed manner on the web page 300 of the link destination is "(500, 100)" and that the annotation information is a red frame of which a line width is "2".

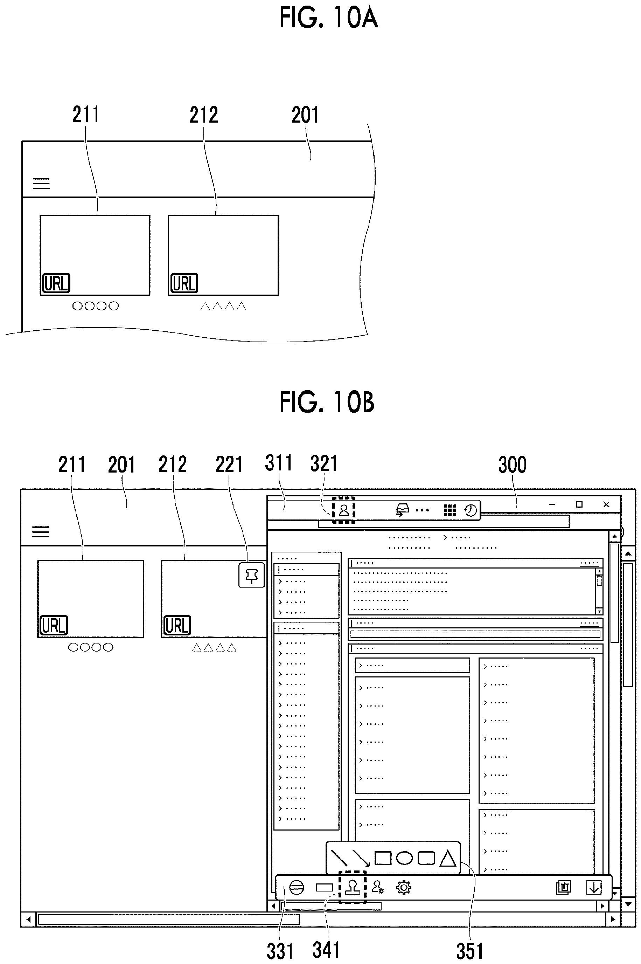

Figs. 10A and 10B and Fig. 11 are diagrams illustrating a specific example of an operation of creating link objects that have the same information for accessing the web page of the link destination and that have different annotation information.

Link objects 211 and 212 displayed on the dedicated UI 201 illustrated in Fig. 10A are link objects having the identical information for accessing the web page of the link destination. Here, an assumption that the link object 211 is associated with the annotation information by the operation illustrated in Fig. 7 and Fig. 8 and that the link object 212 is not associated with the annotation information is made.

In a case where an operation (for example, a mouse-over or click operation) of designating the link object 212 illustrated in Fig. 10A is performed, the web page 300 of the link destination is displayed as illustrated in Fig. 10B. At this point, the link object 212 is not associated with the annotation information.

In a case where the pin button 221 attached to the link object 212 is pressed in a state where the web page 300 of the link destination is displayed, the state where the web page 300 of the link destination is displayed is maintained. The operation bar 311 is displayed in a superimposed manner on the displayed web page 300 of the link destination in the same manner as the example in Fig. 7. Since the operation bar 311 is provided with the operation button 321 for starting the operation of affixing the annotation information, the annotation information can be created and affixed by operating the operation bar 331 that is displayed by pressing the operation button 321.

Fig. 11 illustrates an example in which each of annotation information 411 designated with "quadrangular", "broken line frame", and "not filled" by figure editing and annotation information 412 that is designated with "quadrangular", "thick frame", and "filled with white" by figure editing and that is marked with a text "click" by text editing is affixed. Here, in a case where the examples in Fig. 8 and Fig. 11 are compared with each other, the affixed annotation information is approximately the same but is affixed to different positions.

That is, the annotation information 401 illustrated in Fig. 8 is the annotation information that is affixed to highlight the element 361 among the plurality of elements displayed on the web page 300 of the link destination. On the other hand, the annotation information 411 in Fig. 11 is the annotation information that is affixed to highlight an element 362 among the plurality of elements displayed on the web page 300 of the link destination. Thus, the annotation information 401 in Fig. 8 and the annotation information 411 in Fig. 11 are affixed to different positions. Furthermore, the annotation information that is affixed to guide the user who is the viewer to click the annotation information is also affixed to different positions.

In a case where the operation of editing the annotation information is completed and where the operation button 342 is pressed, the edited annotation information is stored. Specifically, the edited annotation information 411 and 412 are managed in the object DB 131 of the storage unit 13 in association with the link object 212. As described above, while the annotation information 401 and 402 in Fig. 8 are managed in the object DB 131 in association with the link object 211, the annotation information 411 and 412 in Fig. 11 are managed in the object DB 131 in association with the link object 212. That is, while both of the link objects 211 and 212 are link objects associated with information for accessing the web page 300 of the link destination, the link objects 211 and 212 are associated with the annotation information different from each other and thus are managed in the object DB 131 as different data.

In a case where an operation of designating the link object associated with the annotation information is performed, the web page of the link destination is displayed. Furthermore, the annotation information is displayed in a superimposed manner on the web page. The position at which the annotation information is displayed on the web page is the position to which the annotation information is affixed during editing. For example, in a case where the operation of designating the link object 211 associated with the annotation information 401 and 402 illustrated in Fig. 8 is performed, the web page 300 of the link destination is displayed, and furthermore, the annotation information 401 and 402 are displayed in a superimposed manner. Thus, the user who has performed the operation of designating the link object 211 can perceive at a glance that the element 361 among the plurality of elements displayed on the web page 300 of the link destination is to be clicked.

On the other hand, in a case where the operation of designating the link object 212 associated with the annotation information 411 and 412 illustrated in Fig. 11 is performed, the web page 300 of the link destination is performed, and furthermore, the annotation information 411 and 412 are displayed in a superimposed manner. Thus, the user who has performed the operation of designating the link object 212 can perceive at a glance that the element 362 among the plurality of elements displayed on the web page 300 of the link destination is to be clicked. Therefore, each of the annotation information 402 in Fig. 8 and the annotation information 412 in Fig. 11 can be said to be the annotation information that is created in accordance with a use of the web page.

In addition, in creating the link object, the link object that has already been created can be duplicated and edited. In a case where an operation of duplicating an existing link object is performed, information associated with the link object is also duplicated. Accordingly, since the user may edit the link object based on the information associated with the duplicated link object, an effort of creating the link object from scratch may be eliminated. For example, in the example in Fig. 11, the link object 212 for a different use can be efficiently created by duplicating the link object 211 that has already been created and by editing the annotation information.

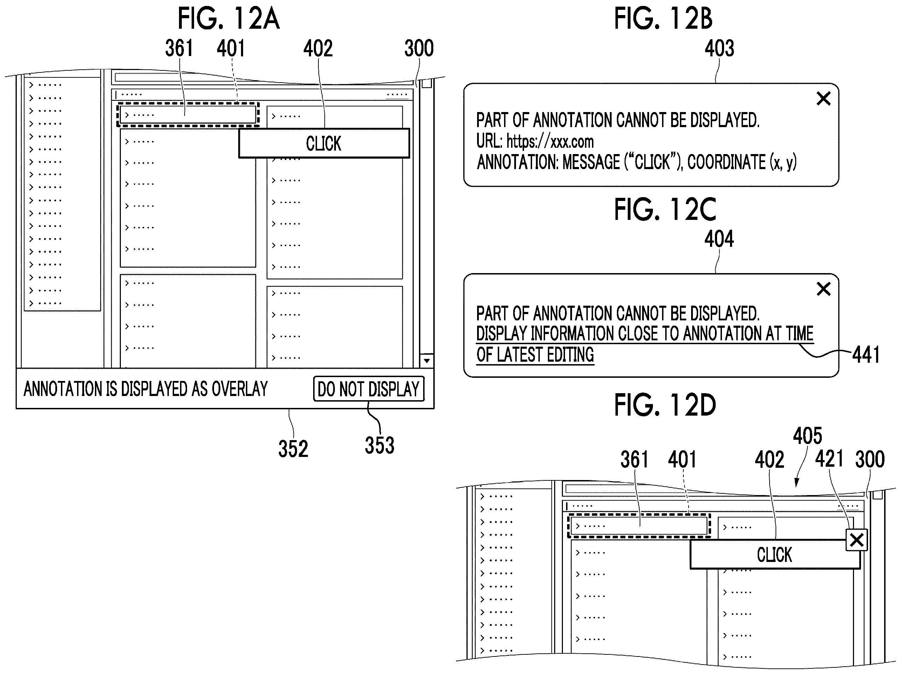

Fig. 12A is a diagram illustrating a specific example of an operation of not displaying the annotation information.

As described above, in a case where the operation of designating the link object associated with the annotation information is performed, the web page of the link destination is displayed, and furthermore, the annotation information is displayed in a superimposed manner on the web page. Fig. 12A illustrates an example in which the web page 300 of the link destination is displayed, and furthermore, the annotation information 401 and 402 are displayed in a superimposed manner.

While the user can perceive at a glance that the element 361 is to be clicked from the annotation information 401 and 402 displayed in a superimposed manner on the web page 300 of the link destination, the annotation information can also be set to be not displayed. Specifically, as illustrated in Fig. 12A, the annotation information can be set to be not displayed by operating an operation bar 352 that is displayed in a superimposed manner on the web page 300 of the link destination. An operation button 353 marked with "do not display" is disposed on the operation bar 352 together with a message "annotation is displayed as overlay". In a case where the operation button 353 is pressed, all of the displayed annotation information are not displayed. For example, in the example in Fig. 12A, the annotation information 401 and 402 are not displayed.

In a case where the operation of designating the link object associated with the annotation information is performed, the web page 300 of the link destination is displayed, and furthermore, the annotation information 401 and 402 are displayed in a superimposed manner on the web page 300. In this case, the position at which the annotation information is displayed is estimated and specified on the information processing system 1 side by relative positioning based on a result of analyzing the HTML information of the link destination. In a case where the position at which the annotation information is displayed cannot be specified as a result of estimation, the notification indicating the presence of the non-displayable annotation information is issued to the user.

Figs. 12B and 12C are diagrams illustrating a specific example of a method of notifying the user of the presence of the non-displayable annotation information. Specifically, Figs. 12B and 12C illustrate a specific example of a method of displaying a banner marked with a message indicating the presence of the non-displayable annotation information as the method of notifying the user of the presence of the non-displayable annotation information.

A banner 403 illustrated in Fig. 12B is marked with information indicating each of the URL of the web page of the link destination and the content and the position of the annotation information together with a message "part of annotation cannot be displayed.". In addition, a link button 441 marked with "display information close to annotation at time of latest editing" is disposed on a banner 404 illustrated in Fig. 12C together with the message "part of annotation cannot be displayed.". In a case where the link button 441 is pressed, a capture image as a captured image of the web page including the annotation information at the time of the latest editing is displayed by referring to the version of the link object.

Fig. 12D is a diagram illustrating a specific example of the capture image of the web page of the link destination displayed in a case where the link button 441 of the banner 404 in the example in Fig. 12C is pressed.

The annotation information 401 affixed to highlight the element 361 and the annotation information 402 affixed to guide the user who is the viewer to click the element 361 are displayed on a capture image 405 of the web page 300 illustrated in Fig. 12D. In addition, a mark 421 marked with a symbol "x" indicating the annotation information of which the display position cannot be specified is attached to the upper right of the annotation information 402. Accordingly, the user who is the viewer of the web page 300 of the link destination can perceive that the annotation information 402 is not displayed on the web page 300 of the link destination by taking a glance at the capture image 405.

For example, as in the example in Fig. 12D, in a case where the capture image 405 of the web page of the link destination is displayed, the capture image 405 of the web page of the link destination is added to the information associated with the link object 211 in the object DB 131 of the storage unit 13.

Fig. 13 is a diagram illustrating a specific example of other information associated with the link object in the object DB 131.

As described above, the link object 211 is associated with the URL of the web page 300 of the link destination and with the annotation information, and these information are managed for each of the versions. However, the information associated with the link object 211 is not limited to these information. For example, as illustrated in Fig. 13, the capture image 405 of the web page 300 of the link destination can be associated. By associating the link object 211 with the capture image 405 of the web page 300 of the link destination, the user can perceive the display content and the display position of the annotation information for each of the versions at a glance.

<Other Exemplary Embodiments>

While the present exemplary embodiment has been described above, the present invention is not limited to the present exemplary embodiment. In addition, effects of the present invention are not limited to the effects disclosed in the present exemplary embodiment. For example, both of the configuration of the information processing system 1 illustrated in Fig. 1 and the hardware configuration of the management server 10 illustrated in Fig. 2 are merely examples for achieving the object of the present invention and are not particularly limited. In addition, the functional configuration of the management server 10 illustrated in Fig. 3 and the functional configuration of the user terminal 30 illustrated in Fig. 4 are merely examples and are not particularly limited. As long as the information processing system 1 in Fig. 1 is provided with a function with which the above processing can be executed as a whole, a functional configuration to be used to implement the function is not limited to the examples in Fig. 3 and Fig. 4.

In addition, the order of the steps of the processing of the management server 10 illustrated in Fig. 5 and Fig. 6 is merely an example and is not particularly limited. Not only the processing may be performed in time series along the illustrated order of the steps, but also the processing may not be performed in time series and may be parallelly or individually performed. In addition, the specific examples illustrated in Fig. 7 to Fig. 13 are merely an example and are not particularly limited.

For example, in the exemplary embodiment, the web page of the link destination is displayed by performing the operation of designating the link object, and the annotation information is displayed in a superimposed manner on the displayed web page. On the other hand, in a case where the web page is directly designated to be displayed without performing the operation of designating the link object, the annotation information is not displayed. For example, "directly designated" means directly inputting the URL into an address bar of a browser.

### (Supplementary Note)

(((1))) An information processing system comprising:
   one or a plurality of processors configured to:
      in a case where an operation of designating a first link object is performed, perform a control of displaying annotation information of a first web page associated with the first link object in a superimposed manner on the first web page; and
      in a case where an operation of designating a second link object is performed, perform a control of displaying annotation information of a second web page associated with the second link object in a superimposed manner on the second web page,
   wherein information for accessing the first web page is identical to information for accessing the second web page.
(((2))) The information processing system according to (((1))), wherein the one or the plurality of processors are configured to:
   manage the information for accessing the first web page and the annotation information of the first web page in association with the first link object; and
   manage the information for accessing the second web page and the annotation information of the second web page in association with the second link object.
(((3))) The information processing system according to (((2))), wherein the one or the plurality of processors are configured to:
   in a case where an operation of editing the annotation information of each of the first web page and the second web page is performed, update the annotation information to content after the editing and manage versions before and after the update.
(((4))) The information processing system according to (((3))), wherein the one or the plurality of processors are configured to:
   manage a captured image of each of the first web page and the second web page on which the annotation information is displayed in a superimposed manner, for each of the versions.
(((5))) The information processing system according to (((2))), wherein the one or the plurality of processors are configured to:
   in a case where an operation of duplicating each of the first link object and the second link object is performed, duplicate each of the first link object and the second link object; and
   manage the information, which is managed in association with each of the first link object and the second link object, in association with each of the first link object and the second link object after the duplication.
(((6))) The information processing system according to (((1))), wherein the one or the plurality of processors are configured to:
   in a case where an operation of inputting the information for accessing each of the first web page and the second web page is performed instead of the operation of designating the first link object or the second link object, perform a control of not displaying the annotation information of each of the first web page and the second web page.
(((7))) The information processing system according to (((6))),
   wherein the operation of inputting the information for accessing each of the first web page and the second web page is an operation of inputting a uniform resource locator of each of the first web page and the second web page into an address bar of a browser.
(((8))) A program causing a computer to implement:
   a function of, in a case where an operation of designating a first link object is performed, displaying annotation information of a first web page associated with the first link object in a superimposed manner on the first web page; and
   a function of, in a case where an operation of designating a second link object is performed, displaying annotation information of a second web page associated with the second link object in a superimposed manner on the second web page,
   wherein information for accessing the first web page is identical to information for accessing the second web page.

According to (((1))) of the present invention, even in a case where the information for accessing the web page of the link destination of each of different link objects is identical, different annotation information can be displayed in a superimposed manner on the web page. Consequently, the annotation information corresponding to the use of the web page can be displayed.

According to (((2))) of the present invention, since each link object is managed in association with the information for accessing the web page and with the annotation information, the use of the web page can be determined for each link object. Consequently, even identical web pages can display different annotation information for each link object.

According to (((3))) of the present invention, in a case where the annotation information is edited, the versions before and after the editing are managed. Thus, a user easily checks each version.

According to (((4))) of the present invention, since the captured image of the web page on which the annotation information is displayed in a superimposed manner is managed for each of the versions, the user easily checks display content and a display position of the annotation information for each version.

According to (((5))) of the present invention, in a case where the operation of duplicating an existing link object is performed, the information associated with the link object is also duplicated. Thus, an effort of creating the link object from scratch can be eliminated for the user.

According to (((6))) of the present invention, operation of the user who does not want to refer to the annotation information can be assisted.

According to (((7))) of the present invention, operation of the user who does not want to refer to the annotation information can be assisted.

According to (((8))) of the present invention, even in a case where the information for accessing the web page of the link destination of each of different link objects is identical, different annotation information can be displayed in a superimposed manner on the web page. Consequently, the annotation information corresponding to the use of the web page can be displayed.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device). In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: information processing system
10: management server
11: control unit
30: user terminal
90: network
101: information management unit
102: information acquisition unit
103: analysis unit
104: information generation unit
105: transmission control unit
301: information acquisition unit
302: transmission control unit
303: display control unit

## Claims

1. An information processing system comprising:
one or a plurality of processors configured to:
in a case where an operation of designating a first link object is performed, perform a control of displaying annotation information of a first web page associated with the first link object in a superimposed manner on the first web page; and
in a case where an operation of designating a second link object is performed, perform a control of displaying annotation information of a second web page associated with the second link object in a superimposed manner on the second web page,
wherein information for accessing the first web page is identical to information for accessing the second web page.

2. The information processing system according to claim 1, wherein the one or the plurality of processors are configured to:
manage the information for accessing the first web page and the annotation information of the first web page in association with the first link object; and
manage the information for accessing the second web page and the annotation information of the second web page in association with the second link object.

3. The information processing system according to claim 2, wherein the one or the plurality of processors are configured to:
in a case where an operation of editing the annotation information of each of the first web page and the second web page is performed, update the annotation information to content after the editing and manage versions before and after the update.

4. The information processing system according to claim 3, wherein the one or the plurality of processors are configured to:
manage a captured image of each of the first web page and the second web page on which the annotation information is displayed in a superimposed manner, for each of the versions.

5. The information processing system according to claim 2, wherein the one or the plurality of processors are configured to:
in a case where an operation of duplicating each of the first link object and the second link object is performed, duplicate each of the first link object and the second link object; and
manage the information, which is managed in association with each of the first link object and the second link object, in association with each of the first link object and the second link object after the duplication.

6. The information processing system according to claim 1, wherein the one or the plurality of processors are configured to:
in a case where an operation of inputting the information for accessing each of the first web page and the second web page is performed instead of the operation of designating the first link object or the second link object, perform a control of not displaying the annotation information of each of the first web page and the second web page.

7. The information processing system according to claim 6,
wherein the operation of inputting the information for accessing each of the first web page and the second web page is an operation of inputting a uniform resource locator of each of the first web page and the second web page into an address bar of a browser.

8. A program causing a computer to implement:
a function of, in a case where an operation of designating a first link object is performed, displaying annotation information of a first web page associated with the first link object in a superimposed manner on the first web page; and
a function of, in a case where an operation of designating a second link object is performed, displaying annotation information of a second web page associated with the second link object in a superimposed manner on the second web page,
wherein information for accessing the first web page is identical to information for accessing the second web page.

9. An information processing method comprising:
displaying, in a case where an operation of designating a first link object is performed, annotation information of a first web page associated with the first link object in a superimposed manner on the first web page; and
displaying, in a case where an operation of designating a second link object is performed, annotation information of a second web page associated with the second link object in a superimposed manner on the second web page,
wherein information for accessing the first web page is identical to information for accessing the second web page.
